## Europäisches Patentamt
## European Patent Office
## Office européen des brevets

(19)

(11) Numéro de publication: **0 238 591**
**B1**

(12) **FASCICULE DE BREVET EUROPEEN**

(45) Date de publication du fascicule du brevet:
**10.01.90**

(51) Int. Cl.⁴: **B 01 D 53/14, C 01 B 17/16**

(21) Numéro de dépôt: **86905856.0**

(22) Date de dépôt: **03.10.86**

(86) Numéro de dépôt international:
**PCT/FR 86/00341**

(87) Numéro de publication internationale:
**WO 87/01960 (09.04.87 Gazette 87/8)**

---

(54) PROCEDE ET DISPOSITIF POUR L'EXTRACTION SELECTIVE DE L'H 2?S D'UN GAZ EN CONTENANT.

---

(30) Priorité: **04.10.85 FR 8514741**

(43) Date de publication de la demande:
**30.09.87 Bulletin 87/40**

(45) Mention de la délivrance du brevet:
**10.01.90 Bulletin 90/2**

(84) Etats contractants désignés:
**BE DE GB IT NL**

(56) Documents cités:
**DE-A- 2 410 737**
**US-A- 4 129 425**

(73) Titulaire: **SOCIETE NATIONALE ELF AQUITAINE (PRODUCTION), Tour Elf 2, Place de la Coupole La Défense 6, F-92400 Courbevole (FR)**

(72) Inventeur: **OLIVEAU, Olivier, Allée des Prés, F-64230 Lescar (FR)**
Inventeur: **PEYTAVY, Jean-Louis, Bourgaber, F-64230 Lescar (FR)**

(74) Mandataire: **Boillot, Marc, SOCIETE NATIONALE ELF AQUITAINE Division Propriété Industrielle Tour Elf, F-92078 Paris la Défense Cédex 45 (FR)**

ACTORUM AG

## Description

L'invention concerne un procédé pour l'extraction sélective de l'$H_2S$ d'un gaz renfermant des composés gazeux acides incluant $H_2S$.

L'extraction sélective de l'$H_2S$ d'un gaz renfermant des composés gazeux acides incluant $H_2S$ est couramment utilisée pour éliminer la plus grande partie, voire la quasi-totalité, de l'$H_2S$ présent dans ce gaz en vue de produire un gaz désulfuré ayant une teneur en $H_2S$ inférieure à un seuil imposé et/ou de générer un courant de gaz acide riche en $H_2S$ et renfermant une quantité aussi faible que possible d'autres composés acides tels que $CO_2$, un tel courant de gaz acide étant utilisable comme source d'$H_2S$ pour la production de soufre suivant le procédé CLAUS d'oxydation ménagée de l'$H_2S$ ou encore pour la synthèse de composés thioorganiques.

Une telle extraction sélective de l'$H_2S$ est habituellement effectuée par lavage du gaz à traiter au moyen d'un liquide absorbant régénérable par chauffage et sélectif d'$H_2S$, c'est-à-dire d'un liquide absorbant qui d'une part est susceptible de retenir les composés gazeux acides tels que $H_2S$ et $CO_2$ et de restituer pratiquement la totalité de ces composés acides par chauffage et d'autre part possède un pouvoir absorbant nettement plus important à l'égard d'$H_2S$ qu'à l'égard des autres composés acides et notamment de $CO_2$. Le liquide absorbant fixe les composés gazeux acides par simple dissolution physique ou/et par dissolution après formation d'un sel ou d'un complexe, instable thermiquement, par réaction desdits composés gazeux acides avec un composé basique, par exemple amine ou alcanolamine, contenu dans le liquide absorbant.

En pratique, le gaz à traiter, qui renferme l'$H_2S$ et d'autres composés gazeux acides tels que $CO_2$, est mis en contact, dans une zone d'absorption, avec le liquide absorbant choisi, circulant à contre-courant, de manière à produire un gaz à teneur réduite en $H_2S$, que l'on évacue en tête de la zone d'absorption, et à soutirer en fond de ladite zone un courant de liquide absorbant chargé en $H_2S$ et renfermant aussi peu que possible de $CO_2$ et autres composés gazeux acides. Ledit courant de liquide absorbant est alors introduit dans une zone de régénération, dans laquelle il est soumis à des conditions de pression et température propres à assurer la libération quasi-complète des composés gazeux acides absorbés, qui sont évacués en tête de la zone de régénération sous la forme d'un effluent gazeux acide riche en $H_2S$, et à produire en fond de zone de régénération un liquide absorbant régénéré, pratiquement exempt de composés gazeux acides dissous, qui est soutiré et réutilisé comme liquide absorbant dans la zone d'absorption.

Lorsque l'effluent gazeux acide riche en $H_2S$ évacué en tête de la zone de régénération ne renferme pas une teneur suffisante en $H_2S$ permettant d'utiliser ledit effluent dans l'application envisagée, notamment la fabrication de soufre par oxydation ménagée de l'$H_2S$ ou la synthèse de composés thioorganiques, les opérations sont répétées, c'est-à-dire que l'effluent gazeux acide est traité dans une seconde zone d'absorption par un liquide absorbant également sélectif de l'$H_2S$ et régénérable par chauffage pour fournir un courant de liquide absorbant fortement chargé en $H_2S$, qui est dirigé vers une seconde zone de régénération pour être régénéré comme indiqué précédemment avec production d'un effluent gazeux acide ayant une teneur plus élevée en $H_2S$ que l'effluent issu du premier traitement.

Une telle manière d'opérer présente, entre autres, l'inconvénient d'avoir à utiliser des installations très volumineuses pour produire un effluent gazeux acide suffisamment riche en $H_2S$ pour être utilisable dans les applications pour lesquelles il est destiné.

Dans la citation US-A-4 129 425 on a proposé un procédé pour l'extraction d'un ou plusieurs composés gazeux contenus dans un mélange gazeux au moyen d'un liquide absorbant desdits composés gazeux et régénérable par chauffage, en opérant dans une zone de traitement unique. Ce procédé consiste à introduire du liquide absorbant dans la partie supérieure de la zone de traitement, ledit liquide absorbant s'écoulant vers la partie inférieure de cette zone, à injecter le mélange gazeux à traiter dans la zone de traitement en un point situé à une distance suffisante en-dessous de l'introduction du liquide absorbant pour réaliser l'extraction désirée du ou desdits composés gazeux présents dans le mélange gazeux à traiter et à évacuer en tête de ladite zone de traitement un mélange gazeux traité ayant une teneur réduite en ledit ou lesdits composés gazeux à extraire, à fournir au liquide absorbant, dans la partie inférieure de la zone de traitement, une énergie calorifique suffisante pour libérer les composés gazeux absorbés par le liquide absorbant et ainsi assurer la régénération de ce liquide et à soutirer en fond de zone un courant de liquide absorbant régénéré, qui est recyclé, après refroidissement, dans la partie supérieure de la zone de traitement, à établir un pic de concentration pour le ou les composés gazeux à extraire dans une portion étroite d'une zone intermédiaire située dans la zone de traitement entre le niveau d'injection du mélange gazeux à traiter et la partie de la zone de traitement où est fournie l'énergie calorifique et à extraire de ladite portion étroite de la zone intermédiaire un effluent riche en le ou les composés gazeux que l'on désire extraire. Le pic de concentration en le ou les composés gazeux à extraire dans la portion étroite de la zone intermédiaire de la zone de traitement est établi en maintenant la température du liquide absorbant descendant entrant dans ladite zone intermédiaire à une valeur suffisamment inférieure à celle de la température de la phase gazeuse ascendante libérée par la régénération du liquide absorbant et pénétrant dans ladite zone intermédiaire pour réaliser, dans ladite portion étroite de la zone intermédiaire, la condensation d'une majeure partie des vapeurs de solvant contenues dans ladite phase gazeuse ascendante, ce qui crée dans cette portion étroite un fort gradient de température, et en maintenant au-dessus de ladite portion des facteurs de stripage supérieurs à 1 pour le ou les composés gazeux à extraire et inférieurs à 1 pour les autres composés gazeux moins solubles.

Comme il ressort de la lecture de l'exemple 2 de la citation, un tel procédé appliqué au traitement d'un mélange gazeux renfermant des composés gazeux acides incluant $H_2S$ peut conduire à la production d'un effluent gazeux acide plus concentré en composés gazeux acides que le mélange gazeux soumis au traitement, mais dans lequel le rapport molaire de l'$H_2S$ à l'ensemble des composés gazeux acides plus volatils que le liquide absorbant et incluant $H_2S$ est le même que dans le mélange gazeux à traiter, ce qui signifie que l'extraction de l'$H_2S$ n'est pas sélective.

Au contraire l'invention a pour objet un procédé d'extraction de l'$H_2S$ d'un gaz renfermant des composés gazeux acides incluant $H_2S$, au moyen d'un liquide absorbant desdits composés gazeux acides et régénérable par chauffage, qui est mis en oeuvre également dans une zone unique de traitement mais permet cependant de produire un effluent gazeux acide fortement enrichi en $H_2S$ par rapport à l'effluent gazeux susceptible d'être obtenu en faisant appel au procédé de la citation.

En particulier, lorsque le gaz à traiter renferme $CO_2$ en plus de l'$H_2S$, le procédé selon l'invention permet de limiter la coabsorption du $CO_2$ par le liquide absorbant et ainsi de réduire très fortement la quantité de $CO_2$ passant dans l'effluent gazeux acide enrichi en $H_2S$ même si le gaz à traiter renferme une teneur importante de $CO_2$.

Le procédé selon l'invention est du type dans lequel on introduit du liquide absorbant dans la partie supérieure de la zone de traitement, ledit liquide absorbant s'écoulant vers la partie inférieure de cette zone, on injecte le gaz à traiter dans la zone de traitement en un point situé à une distance suffisante en-dessous de l'introduction du liquide absorbant pour réaliser l'extraction désirée de l'$H_2S$ présent dans le gaz à traiter et évacue en tête de ladite zone de traitement un gaz à teneur réduite en $H_2S$, on fournit au liquide absorbant, dans la partie inférieure de la zone de traitement, une énergie calorifique suffisante pour libérer les composés gazeux acides absorbés par le liquide absorbant et ainsi assurer la régénération de ce liquide et soutire en fond de zone un courant de liquide absorbant régénéré, qui est utilisé, après refroidissement, pour constituer une partie ou la totalité du liquide absorbant introduit dans la partie supérieure de la zone de traitement, et l'on produit un effluent gazeux acide renfermant $H_2S$ en effectuant en un point de la zone de traitement situé entre le niveau d'injection du gaz à traiter et la partie inférieure de cette zone où est fournie l'énergie calorifique, un soutirage d'une partie de la phase gazeuse disponible dans la zone de taitement en ce point et résultant de la régénération du liquide absorbant, ce procédé se caractérisant en ce que l'on utilise un liquide absorbant des gaz acides qui est sélectif de l'$H_2S$ et en ce que l'on contrôle l'énergie calorifique fournie au liquide absorbant de telle sorte que la température de la zone de traitement au niveau du soutirage de l'effluent gazeux renfermant $H_2S$ soit supérieure d'au plus 30° C à la température du liquide absorbant entrant dans la zone de traitement, ce qui conduit à l'obtention d'un effluent gazeux acide plus riche en $H_2S$ que la phase gazeuse susceptible d'être libérée en régénérant le liquide absorbant directement issu de la mise en contact du gaz à traiter avec le liquide absorbant neuf ou régénéré.

Dans la zone de traitement unique, l'espace compris entre le niveau d'introduction du liquide absorbant et le niveau d'injection du gaz à traiter joue le rôle de zone d'absorption, l'espace défini entre ledit niveau d'injection du gaz à traiter et le niveau de soutirage de l'effluent gazeux acide fortement enrichi en $H_2S$ constitue une zone d'enrichissement, tandis que l'espace compris entre ledit niveau de soutirage et le fond de la zone de traitement joue le rôle de zone de régénération.

Le débit de l'effluent gazeux acide fortement enrichi en $H_2S$, qui est soutiré de la zone de traitement, dépend de la teneur en $H_2S$ que l'on désire obtenir dans cet effluent et plus précisément varie en sens inverse de cette teneur. Ledit débit d'effluent gazeux acide enrichi en $H_2S$ représente une fraction du débit total des composés gazeux acides présents dans le gaz à traiter, cette fraction étant d'autant plus faible que la teneur en $H_2S$ recherchée pour l'effluent gazeux acide enrichi est élevée.

Le procédé suivant l'invention peut être utilisé pour extraire sélectivement l'$H_2S$ contenu dans tous les types de gaz disponibles à basse pression, c'est-à-dire sous une pression absolue au plus égale à environ 5 bars. Un tel procédé s'applique avantageusement au traitement de gaz renfermant $H_2S$ et $CO_2$ en vue de produire un effluent gazeux acide ayant une teneur suffisamment élevée en $H_2S$ pour être utilisable comme source d'$H_2S$ dans les usines à soufre CLAUS ou les ateliers de synthèse de composés thioorganiques. En particulier on peut faire appel au procédé suivant l'invention pour traiter des mélanges d'$H_2S$ et de $CO_2$, encore appelés gaz acides, renfermant moins de 60% d'$H_2S$ en volume dans le but de produire un effluent gazeux acide renfermant en volume 95% d'$H_2S$ ou plus.

Le liquide absorbant utilisable pour extraire selectivement l'$H_2S$ peut être choisi parmi les divers liquides absorbants présentant une sélectivité suffisante pour l'$H_2S$ et susceptibles d'être régénérés par chauffage et plus spécialement par rebouillage. Le liquide absorbant peut être à base d'un ou plusieurs solvants à action physique tels que méthanol, diméthyléther de polyéthylène glycols, N-méthylpyrrolidone, sulfolane, esters phosphoriques, ou bien consister en un solvant à action chimique formé par une solution aqueuse d'un ou plusieurs composés fixant les gaz acides du type $H_2S$ et $CO_2$ sous la forme de complexes ou de sels instables thermiquement, comme par exemple une solution aqueuse d'une alcanolamine telle que méthyldiéthanolamine, triéthanolamine, diisopropanolamine. Le liquide absorbant peut également être choisi parmi les mélanges des deux types de solvant précités comme par exemple les mélanges d'eau, de diisopropanolamine et de sulfolane, les mélanges d'eau, de méthyldiéthanolamine et de sulfolane et les mélanges d'eau, de méthanol et d'une ou plusieurs amines telle que méthyldiéthanolamine, monoéthanolamine, diéthanolamine et diisopropanolamine. Convient tout spécialement comme liquide absorbant sélectif de l'$H_2S$ et régénérable par chauffage, une solution aqueuse d'une alcanolamine telle que méthyldiéthanolamine, triéthanolamine et diisoproponolamine, dont la concentration en alcanolamine est comprise entre 1 N et 8 N et se situe de préférence entre 3 N et 6 N.

La pression régnant dans l'espace jouant le rôle de zone d'absorption correpond sensiblement à celle du gaz à traiter injecté dans la zone de traitement.

La température à choisir pour la mise en contact du gaz à traiter, dans la zone d'absorption, avec le liquide absorbant circulant à contre-courant n'est pas critique et dépend, entre autres, de la nature du liquide absorbant utilisé. Par exemple pour un liquide absorbant choisi parmi les solutions aqueuses d'alcanolamines, des températures d'absorption allant d'environ 10°C à environ 80°C peuvent être retenues. La température dans la zone d'absorption correspond sensiblement, en général, à celle du liquide absorbant introduit dans la zone de traitement.

Le débit de liquide absorbant, introduit dans la zone de traitement et circulant dans ladite zone depuis la zone d'absorption jusqu'à la zone de régénération en passant par la zone d'enrichissement, est lié, entre autres, à la teneur en $H_2S$ du gaz à traiter et également à la quantité d'$H_2S$ que l'on tolère dans le gaz évacué en tête de la zone de traitement.

Les conditions de pression et de température dans la zone de régénération sont choisies, compte-tenu de la nature du liquide absorbant employé pour fixer l'$H_2S$, de telle sorte que ledit $H_2S$ et les autres com-posés gazeux acides tels que $CO_2$ retenus par le liquide absorbant au cours der son passage dans les zones d'absorption puis d'enrichissement soient libérés et que le liquide absorbant régénéré soutiré en fond de la zone de traitement soit pratiquement exempt de composés gazeux acides dissous. La pression absolue à la partie supérieure de la zone de régénération est généralement inférieure à 5 bars (0,5 MPa) et se situe le plus souvent entre 1,3 (0,13 MPa) et 2,5 bars (0,25 MPa). Le maintien d'une telle pression impose une température à la partie inférieure de la zone de régénération comprise le plus souvent entre 100 et 180°C environ, ce qui correspond à une température en tête de la zone de régénération allant d'environ 80°C à environ 125°C. Le maintien de la température requise dans la partie inférieure de la zone de régénération est réalisé par apport de l'énergie calorifique nécessaire au liquide absorbant arrivant dans ladite partie de la zone de régénération, cet apport d'énergie calorifique pouvant être effectué par toute technique connue et avantageusement par rebouillage.

Dans la zone d'enrichissement, le liquide absorbant qui s'écoule de la zone d'absorption et contient déjà une certaine quantité d'$H_2S$ et autres compo-sés gazeux acides tels que $CO_2$ absorbés extraite du gaz injecté dans la zone d'absorption, rencontre les composés gazeux acides libérés au cours de la régénération et, par suite de sa sélectivité pour $H_2S$, il réabsorbe une quantité supplémentaire d'$H_2S$ et de ce fait la phase gazeuse en équilibre avec le liquide absorbant dans ladite zone d'enrichissement, et en particulier au voisinage de la zone de régénération, est fortement enrichie en $H_2S$. En contrôlant le débit de l'effluent gazeux acide soutiré de la zone de traitement on peut comme indiqué précédemment obtenir la teneur désirée en $H_2S$ dans cet effluent.

Le procédé selon l'invention peut être mis en oeuvre dans tout dispositif constitué d'une colonne unique agencée intérieurement pour permettre la mise en contact d'un gaz avec un liquide et présentant en tête un orifice d'évacuation des gaz et en fond un orifice de soutirage d'un liquide, ce dernier orifice se prolongeant extérieurement par un conduit de recyclage débouchant dans la colonne en-dessous de l'orifice d'évacuation des gaz, ladite colonne étant munie d'un conduit d'amenée de gaz à traiter débouchant dans cette colonne à une certaine distance en-dessous du conduit de recyclage et étant équipée dans sa partie inférieure d'un système de chauffage, par exemple un système du type rebouilleur, tandis qu'un organe de soutirage d'un effluent gazeux, agencé de préférence pour autoriser une variation contrôlée du débit de soutirage, est monté sur la colonne entre le conduit d'amenée de gaz à traiter et le système de chauffage.

Dans la colonne, l'espace compris entre les niveaux des conduits de recyclage et d'amenée de gaz à traiter joue le rôle d'une zone d'absorption, l'espace défini entre le niveau du conduit d'amenée de gaz à traiter et le niveau de l'organe de soutirage constitue une zone d'enrichissement, tandis que l'espace compris entre ledit niveau de l'organe de soutirage et le fond de la colonne joue le rôle de zone de régénération.

Le conduit de recyclage est avantageusement équipé d'une pompe et, en aval de cette pompe, d'un système de refroidissement fonctionnant par échange indirect de calories.

La colonne formant le dispositif pour la mise en oeuvre du procédé suivant l'invention peut être de tout type habituellement utilisé pour la mise en contact d'un gaz avec un liquide et peut par exemple consister en une colonne à plateaux ou encore en une colonne à garnissage. Le nombre de plateaux ou la hauteur équivalente de garnissage de la colonne est choisi pour qu'en fonctionnement les zones d'absorption, d'enrichissement et de régénération puissent jouer correctement leur rôle, de manière à obtenir l'enrichissement désiré en $H_2S$ dans l'effluent gazeux acide soutiré de la colonne et le cas échéant à évacuer en tête de la colonne un gaz, qui renferme la teneur minimale imposée en $H_2S$.

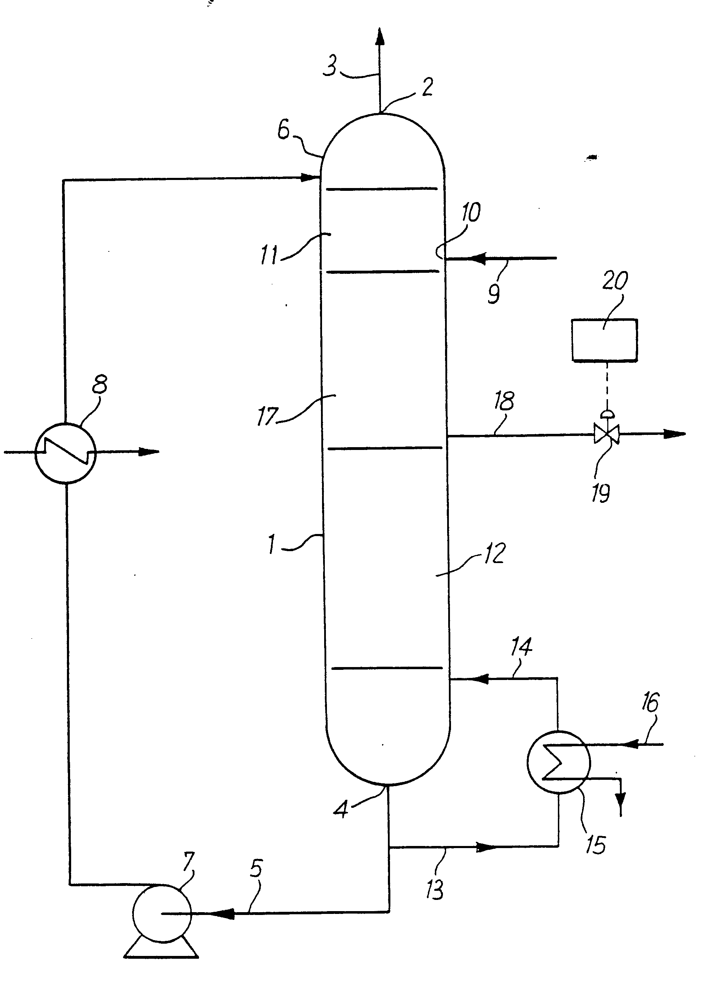

L'invention sera mieux comprise à la lecture de la description suivante de l'une de ses formes de mise en oeuvre donnée à titre d'illustration en référence à la figure du dessin annexé représentant schématiquement un dispositif suivant l'invention utilisant une colonne à plateaux.

En se référant à la figure, le dispositif d'extraction sélective de l'$H_2S$ de gaz renfermant des composés gazeux acides incluant $H_2S$ est constitué d'une colonne 1 à plateaux présentant en tête un orifice 2 d'évacuation des gaz prolongé per un conduit 3 et en fond on orifice 4 de soutirage de liquide. Ce dernier orifice se prolonge extérieurement par un conduit 5 de recyclage, qui débouche dans la partie supérieure de la colonne 1 en un point 6 situé en-dessous de l'orifice 2. Sur le conduit 5 sont montés une pompe 7 et, en aval de cette dernière, un système 8 de refroidissement par échange indirect de calories. La colonne 1 est munie d'un conduit 9 d'amenée du gaz à traiter, qui débouche dans ladite colonne en un point 10 situé à une certaine distance en-dessous du conduit 5 de recyclage. Dans sa partie inférieure, la colonne 1 est associée, par des tubulures d'entrée 13 et de sortie 14, à un rebouilleur 15 chauffé par échange indirect de calories au moyen de vapeur d'eau saturée circulant dans une tubulure 16. La colonne 1 est en outre équipée d'un organe de soutirage d'un effluent gazeux, qui est monté entre le conduit 9 d'amenée du gaz à traiter et la tubulure 14 connectant la sortie du rebouilleur 15 à la colonne 1 et consiste en un conduit 18 de soutirage sur lequel est placée une vanne 19 à ouverture réglable. Ladite vanne est commandée soit manuellement ou avantageusement, comme représenté, par un régulateur 20, qui peut être un régulateur de débit ou encore un régulateur de la teneur en $H_2S$ de l'effluent gazeux soutiré à travers la vanne. Dans la colonne 1, l'espace 11 défini entre les niveaux des points 6 et 10 où débouchent respectivement le conduit 5 de recyclage et le conduit 9 d'amenée du gaz à traiter joue le rôle de zone d'absorption, l'espace 17 situé entre le niveau du conduit 9 d'amenée du gaz à traiter et le niveau de l'organe de soutirage comportant le conduit 18 de soutirage se comporte comme une zone d'enrichissement tandis que l'espace 12 situé entre le niveau de l'organe de soutirage et le fond de la colonne 1 joue le rôle d'une zone de régénération.

Le fonctionnement de ce dispositif peut être schématisé comme suit:

Le gaz à traiter, qui renferme l'$H_2S$ à extraire et en outre, par exemple, du $CO_2$ dont on veut limiter au maximum l'extraction, arrive dans la colonne 1 par le conduit 9 et rencontre, à contre-courant dans la zone 11 d'absorption, le liquide absorbant sélectif de l'$H_2S$ et régénérable par chauffage qui est introduit, par le conduit de recyclage 5, au point 6 de ladite colonne et s'écoule par gravité vers le bas de cette colonne. Par suite de sa sélectivité pour l'$H_2S$, le liquide absorbant fixe la plus grande partie de l'$H_2S$ présent dans le gaz à traiter ainsi qu'une quantité plus faible du $CO_2$. Par l'orifice 2 de la colonne et le conduit 3 associé est évacué un gaz dont la teneur en $H_2S$ à été abaissée à la valeur minimale désirée.

Le liquide aborbant chargé des composés gazeux acides $H_2S$ et $CO_2$, absorbés dans la zone d'absorption, traverse la zone 17 d'enrichissement, dont le rôle sera expliqué plus loin, et arrive dans la zone 12 de régénération. Dans cette dernière zone le liquide absorbant est maintenu à l'ébullition sous une pression supérieure à la pression atmosphérique, ladite pression étant généralement comprise entre 1 et 5 bars (0,1 et 0,5 MPa) absolus, de manière à libérer les composés gazeux acides absorbés et à réaliser leur stripage par les vapeurs de liquide absorbant.

Le liquide absorbant régénéré est soutiré par l'orifice 4 et ramené dans la colonne 1, par le conduit 5 de recyclage débouchant au point 6, sous l'action de la pompe 7 et après avoir été refroidi, dans le système 8 de refroidissement, à la température appropriée pour sa mise en contact avec le gaz à traiter dans la zone d'absorption. Les calories nécessaires au maintien à l'ébullition du liquide absorbant dans la zone de régénération sont fournies par passage d'une partie du liquide absorbant régénéré, soutiré par l'orifice 4, dans le rebouilleur 15 chauffé par la vapeur d'eau saturée passant dans la tubulure 16. L'énergie calorifique fournie au liquide absorbant dans le rebouilleur est contrôlée, par tout moyen connu à cet effet, pour que la température dans la colonne 1 au niveau du conduit 18 de soutirage de l'effluent gazeux ne soit qu'au plus 30°C supérieure, à la température du liquide absorbant entrant dans la colonne au point 6, ce qui permet de soutirer par le conduit 18 un effluent gazeux pratiquement sec.

Les composés gazeux acides $H_2S$ et $CO_2$ libérés dans la zone 12 de régénération sont stripés par les vapeurs du liquide absorbant hors de cette zone et sont ainsi amenés à pénétrer dans la zone 17 d'enrichissement où ils recontrent le liquide absorbant s'écoulant de la zone 11 d'absorption et renfermant donc une certaine quantité d'$H_2S$ et de $CO_2$ absorbés extraite du gaz injecté dans la zone 11 par le conduit 9.

Dans la zone 17 de la colonne le liquide absorbant, du fait de sa sélectivité pour $H_2S$, réabsorbe une quantité substantielle d'$H_2S$ si bien que dans la partie de cette zone située au voisinage du niveau du soutirage la phase gazeuse en équilibre avec le liquide absorbant a une teneur en $H_2S$ substantiellement plus élevée que la phase gazeuse susceptible d'être obtenue par régénération du liquide absorbant directement issu de la zone d'absorption.

A travers la vanne 19 montée sur le conduit 18 de soutirage on recueille un effluent gazeux acide fortement enrichi en $H_2S$. Le débit de cet effluent représente seulement une fraction du débit des composés gazeux acides $H_2S$ et $CO_2$ disponibles dans le gaz à traiter arrivant dans la colonne 1 par le conduit 9, cette fraction étant d'autant plus faible que la valeur désirée pour la teneur en $H_2S$ de l'effluent recueilli est élevée.

Lorsque l'on opère de manière à évacuer en tête de la colonne 1 un gaz ne renfermant pratiquement plus d'$H_2S$, la quasi totalité de l'$H_2S$ contenu dans le gaz à traiter peut être récupérée par le conduit 18 de soutirage.

Pour compléter la description précédente, on donne ci-après, à titre non limitatif, un exemple concret de mise en oeuvre du procédé suivant l'invention.

Exemple:

On traitait un gaz acide consistant en un mélange renfermant, en volume, 60% d'$H_2S$ et 40% de $CO_2$, en opérant dans un dispositif analogue à celui décrit en référence à la figure du dessin annexé, la colonne dudit dispositif étant équipée de 20 plateaux.

Le liquide absorbant était consitué d'une solution aqueuse 4 N de méthyldiéthanolamine (en abrégé MDEA).

En comptant les plateaux de la colonne à partir du sommet de cette dernière, le conduit 9 d'introduction du gaz à traiter débouchait dans ladite colonne entre le deuxième et le troisième plateau tandis que la tubulure 19 du système 18 de soutirage était montée entre le dixième et le onzième plateau, ce qui équivalait à former des zones d'absorption, d'enrichissement et de régénération comportant respectivement 2, 8 et 10 plateaux.

Le gaz à traiter arrivait dans la colonne 1 avec un débit de 11 000 Nm$^3$/h, une pression de 2 bars (0,5 MPa) absolus et une température d'environ 40° C et rencontrait dans ladite colonne, à contre-courant, la solution aqueuse de MDEA injectée dans la colonne, par le conduit 5 de recyclage, avec un débit de 130 m$^3$/h et une température d'environ 40°C.

La solution aqueuse de MDEA était portée en fond de la colonne à une température d'environ 125° C par de la vapeur d'eau saturée sous une pression absolue de 4 bars circulant dans la tubulure 16 du rebouilleur.

La température dans la zone 17 d'enrichissement avait une valeur d'environ 60° C au niveau du conduit 18 de soutirage de l'effluent gazeux enrichi en H$_2$S.

On donne ci-après la teneur en H$_2$S de cet effluent gazeux pour différentes valeurs du débit de soutirage, c'est-à-dire pour différentes ouvertures de la vanne 19:

Débit de soutirage de l'effluent
gazeux acide (Nm$^3$/h): 6270 5000 2750
Teneur molaire en H$_2$S de
l'effluent soutiré (%): 95 97 98

Les résultats ci-dessus montrent que le procédé suivant l'invention permet de produire un effluent gazeux acide substantiellement enrichi en H$_2$S par rapport au gaz acide de départ et que cet enrichissement peut être contrôlé en faisant varier le débit de soutirage dudit effluent gazeux.

## Revendications

1. Procédé pour l'extraction sélective de l'H$_2$S d'un gaz renfermant des composés gazeux acides incluant H$_2$S au moyen d'un liquide absorbant desdits composés gazeux acides et régénérable par chauffage en opérant dans une zone de traitement unique, ledit procédé etant du type dans lequel on introduit du liquide absorbant dans la partie supérieure de la zone de traitement, ledit liquide absorbant s'écoulant vers la partie inférieure de cette zone, on injecte le gaz à traiter dans la zone de traitement en un point situé à une distance suffisante en-dessous de l'introduction du liquide absorbant pour réaliser l'extraction désirée de l'H$_2$S présent dans le gaz à traiter et évacue en tête de ladite zone de traitement un gaz à teneur réduite en H$_2$S, on fournit au liquide absorbant, dans la partie inférieure de la zone de traitement, une énergie calorifique suffisante pour libérer les composés gazeux acides absorbés par le liquide absorbant et ainsi assurer la régénération de ce liquide et soutire en fond de zone un courant de liquide absorbant régénéré, qui est utilisé, après refroidissement, pour constituer une partie ou la totalité du liquide absorbant introduit dans la partie supérieure de la zone de traitement, et l'on produit un effluent gazeux acide renfermant H$_2$S en effectuant en un point de la zone de traitement situé entre le niveau d'injection du gaz à traiter et la partie inférieure de cette zone où est fournie l'énergie calorifique, un soutirage d'une partie de la phase gazeuse disponible dans la zone de traitement en ce point et résultant de la régénération du liquide absorbant, ce procédé se caractérisant en ce que l'on utilise un liquide absorbant des gaz acides qui est sélectif de l'H$_2$S et en ce que l'on contrôle l'énergie calorifique fournie au liquide absorbant de telle sorte que la température dans la zone de traitement au niveau du soutirage de l'effluent gazeux renfermant H$_2$S soit supérieure d'au plus 30°C à la température du liquide absorbant entrant dans la zone de traitement, ce qui conduit à l'obtention d'un effluent gazeux acide plus riche en H$_2$S que la phase gazeuse susceptible d'être libérée en régénérant le liquide absorbant directement issu de la mise en contact du gaz à traiter avec le liquide absorbant neuf ou régénéré.

2. Procédé suivant la revendication 1, caractérisé en ce que le débit de l'effluent gazeux acide enrichi en H$_2$S soutiré de la zone de traitement, représente une fraction du débit total des gaz acides présents dans le gaz à traiter, ladite fraction étant choisie d'autant plus faible que la teneur en H$_2$S désirée pour l'effluent gazeux acide est élevée.

3. Procédé suivant la revendication 1 ou 2, caractérisé en ce que la pression absolue du gaz à traiter injecté dans la zone de traitement est au plus égale à 5 bars (0,5 MPa).

4. Procédé suivant l'une des revendications 1 à 3, caractérisé en ce que le liquide absorbant est une solution aqueuse d'une alcanolamine fixant sélectivement l'H$_2$S et en particulier une solution aqueuse de méthyldiéthanolamine.

5. Procédé suivant la revendication 4, caractérisé en ce que la solution aqueuse d'alcanolamine a une concentration en alcanolamine comprise entre 1 N et 8 N et de préférence entre 3 N et 6 N.

6. Procédé suivant l'une des revendications 1 à 5, caractérisé en ce que le gaz à traiter renferme simultanément H$_2$S et CO$_2$.

## Patentansprüche

1. Verfahren zur selektiven Extraktion von H$_2$S aus einem Gas, das saure gasförmige Verbindungen einschließlich H$_2$S enthält, mit Hilfe einer Flüssigkeit, welche diese sauren gasförmigen Verbindungen absorbiert und durch Erwärmen in einer einzigen Behandlungszone regenerierbar ist, wobei man die Absorptionsflüssigkeit in den oberen Teil der Behandlungszone einführt, wobei die Absorptionsflüssigkeit in Richtung des unteren Teils dieser Zone fließt, man das zu behandelnde Gas in die Behandlungszone an einer Stelle einspritzt, die in einem ausreichenden Abstand unterhalb der Stelle für die Einführung der Absorptionsflüssigkeit für die Durchführung der gewünschten Extraktion des H$_2$S in dem zu behandelnden Gas angeordnet ist, man am Kopf der Behandlungszone ein Gas mit vermindertem H$_2$S-Gehalt abläßt, der Absorptionsflüssigkeit im unteren Teil der Behandlungszone Wärmeenergie zuführt, die ausreicht, um die von der Absorptionsflüssigkeit absorbierten sauren gasförmigen Verbindungen abzutrennen und so die Regeneration der Absorptionsflüssigkeit zu gewährleisten, man am Boden der Zone einen Strom der regenerierten Absorptionsflüssigkeit abläßt, der nach Abkühlung für die Bildung eines Teils oder der Gesamtheit der Absorptionsflüssigkeit verwendet wird, die in den oberen Teil der Behandlungszone eingeführt wurde, man einen sauren Gasabstrom erzeugt, der $H_2S$ enthält, indem man an einer Stelle der Behandlungszone zwischen dem Niveau für die Einspritzung des zu behandelnden Gases und dem unteren Teil dieser Zone, der die Wärmeenergie zugeführt wurde, einen Teil der in der Behandlungszone an diesem Punkt zur Verfügung stehenden Gasphase, die aus der Regeneration der Absorptionsflüssigkeit stammt, abzieht, dadurch gekennzeichnet, daß man eine saure Gase absorbierende Flüssigkeit verwendet, die für $H_2S$ selektiv ist, und die der Absorptionsflüssigkeit zugeführte Wärmeenergie so steuert, daß die Temperatur in der Behandlungszone auf dem Niveau des Abzugs des $H_2S$ enthaltenden Gasabstroms höchstens 30° C über der Temperatur der Absorptionsflüssigkeit liegt, die in die Behandlungszone eintritt, was zu einem sauren Gasabstrom führt, der mehr $H_2S$ enthält als die Gasphase, die bei der Regeneration der Absorptionsfllüssigkeit, die unmittelbar aus der Kontaktierung des zu behandelnden Gases mit der frischen oder regenerierten Absorptionsflüssigkeit stammt, abgetrennt werden kann.

2. Verfahren nach Anspruch 1, dadurch gekennzeichnet, daß die Menge des mit $H_2S$ angereicherten aus der Behandlungszone abgezogenen sauren Gasstroms einen Anteil der Gesamtmenge der in dem zu behandelnden Gas enthaltenen sauren Gase darstellt, wobei dieser Anteil umso geringer gewählt wird, je höher der gewünschte $H_2S$-Gehalt des sauren Gasabstroms ist.

3. Verfahren nach Anspruch 1 oder 2, dadurch gekennzeichnet, daß das zu behandelnde Gas in die Behandlungszone unter einem absoluten Druck von über ca. 5 bar (0,5 MPa) eingespritzt wird.

4. Verfahren nach einem der Ansprüche 1 bis 3, dadurch gekennzeichnet, daß die Absorptionsflüssigkeit eine wässerige Lösung eines Alkanolamins ist, das $H_2S$ selektiv fixiert und insbesondere eine wässerige Lösung von Methyldiethanolamin darstellt.

5. Verfahren nach Anspruch 4, dadurch gekennzeichnet, daß die wässerige Alkanolaminlösung eine Konzentration an Alkanolamin zwischen 1 N und 8 N und vorzugsweise zwischen 3 N und 6 N aufweist.

6. Verfahren nach einem der Ansprüche 1 bis 5, dadurch gekennzeichnet, daß das zu behandelnde Gas gleichzeitig $H_2$ und $CO_2$ enthält.

**Claims**

1. A method for the selective extraction of $H_2S$ from a gas containing gaseous acid compounds including $H_2S$, by means of a liquid which absorbs the said gaseous acid compounds and which is capable of being regenerated by heating, the process being performed in a single treatment zone, and being of the type in which absorbent liquid is introduced into the upper part of the treatment zone, the said absorbent liquid flowing towards the lower part of this zone, the gas to be treated being injected into the treatment zone at a point situated at a sufficient distance below that at which the absorbent liquid is introduced, in order to carry out the desired extraction fo the $H_2S$ present in the gas to be treated, a gas with a reduced content of $H_2S$ being drawn off at the head of the said treatment zone, sufficient calorific energy being supplied to the absorbent liquid in the bottom part of the treatment zone to release the gaseous acid compounds absorbed by the absorbent liquid, thus ensuring regeneration of this liquid, a stream of regenerated absorbent liquid being drawn off at the bottom of the zone and which, after being cooled, is used to make up a part or the whole of the absorbent liquid introduced into the upper part of the treatment zone, a gaseous acid effluent which contains $H_2S$ being produced at a point in the treatment zone which is situated between the level at which the gas to be treated is injected and the lower part of this zone, at which the calorific energy is supplied, by drawing off a part of the gaseous phase available in the treatment zone at this point and resulting from regeneration of the absorbent liquid, this method being characterised in that a liquid is used which is absorbent in respect of acid gases and which is $H_2S$ selective and in that the calorific energy supplied to the absorbent liquid is controlled in such a way that the temperature in the treatment zone at the level at which the gaseous effluent containing $H_2S$ is drawn off is higher by at most 30° C than the temperature of the absorbent liquid entering the treatment zone, which results in the production of a gaseous acid effluent which is richer in $H_2S$ than the gaseous phase which is capable of being released by regenrating the absorbent liquid emerging directly from the contact between the gas to be treated and the new or regenerated absorbent liquid.

2. A method according to Claim 1, characterised in that the rate of flow of gaseous acid effluent enriched with $H_2S$ which is drawn off from the treatment zone represents a fraction of the total flow of acid gases present in the gas to be treated and in that the higher the $H_2S$ content desired in the gaseous acid effluent, the smaller the chosen fraction will be.

3. A method according to Claim 1 or 2, characterised in that the absolute pressure of the gas to be treated injected into the treatment zone is at most equal to 54 bars (0.5 MPa).

4. A method according to one of Claims 1 to 3, characterised in that the absorbent liquid is an aqueous solution of an alkanolamine which selectively fixes $H_2S$ and is in particular an aqueous solution of methyl diethanolamine.

5. A method according to Claim 4, characterised in that the aqueous alkanolamine solution has an alkanolamine concentration which is between 1 N and 8 N and preferably between 3 N and 6 N.

6. A method according to one of Claims 1 to 5, characterised in that the gas to be treated simultaneously contains $H_2S$ and $CO_2$.